# EUROPEAN PATENT APPLICATION

(11) **EP 0 964 572 A1**
(43) Date of publication of application: **15.12.1999**
(21) Application number: 98401374.8
(22) Date of filing: 08.06.1998
(51) Int. Cl.: H04N 5/00

(54) **Decoder and security module for a digital transmission system**

(71) Applicant: CANAL+ Société Anonyme, 75711 Paris Cedex 15 (FR)
(72) Inventor: Declerck, Christophe, 28210 Senantes (FR)
(74) Representative: Cozens, Paul Dennis

(57) **Abstract**

A decoder 12 in particular for a digital television system and adapted to receive a transport packet stream containing table or section data encapsulated within the packet payloads. The decoder is characterised in comprising a means 80 for filtering table or section data configurable in response to filter data received from a portable security module 30 such as a smart card.

The invention equally extends to a portable security module 30 including a memory holding such data as is necessary to configure the table or section filter 80, and a method for processing a transport packet stream including encapsulated table and section data using such a decoder 12 and security module 30.

In a preferred embodiment, the filter 80 is adapted to filter out conditional access messages in response to the table or section filter data received from the portable security module 30, these messages being thereafter forwarded to the security module for processing.

## Description

The present invention relates to a decoder and security module for a digital transmission system and method of operating a decoder and security module, in particular for use in a digital television system.

Conventional digital television broadcast systems transmit data in the form of discrete transport stream packets or transport packets, each packet being of a predetermined length and containing a header and a payload. The MPEG standard is the currently favoured standard in this domain and sets out, amongst other things, a predetermined format for such packets.

The packet header comprises general descriptive data regarding the packet, whilst the payload comprises the data to be processed at the receiver. The packet header includes at least a packet ID or PID identifying the packet. The payload of the packet may contain audio, video or other data such as application data or, in particular, conditional access system data.

Conventionally, the incoming data stream is filtered by a receiver/decoder according to the PID of each packet. Data requiring immediate processing such as audio or visual data is communicated to an appropriate processor in the form of what is conventionally known as a packetised elementary stream or PES. This continuous flux of data, which is formed by assembling the payloads of the transport packets, itself comprises a sequence of packets, each PES packet comprising a packet header and payload.

Other data not requiring immediate processing may also be encapsulated within the payloads of the transport packets. Unlike PES data, which is treated immediately by a processor to generate a real time output, this sort of data is typically processed in an asynchronous manner by the decoder processor. In this case, data is formatted in a single table or a series of sections or tables, each including a header and a payload, the header of the section or table including a table ID or TID.

In the case where the access to a transmission is to be restricted, for example, in a pay TV system, conditional access data may be included in a table or section broadcast in the transport stream with the transmission. This conditional access data is filtered by the receiver/decoder and passed to a portable security module, such as smart card, inserted in the decoder. The data is then processed by the smart card in order to generate, for example, a control word subsequently used by the decoder to descramble a transmission.

One problem with known systems lies in the volume of data that will be received and processed by the receiver/decoder and notably the volume of conditional access messages eventually forwarded to the smart card or security module. In particular, the processing capabilities of a smart card processor and the capacity of the communication channel between the decoder and smart card may be insufficient to handle a given volume of messages. This problem is exacerbated by the increasing tendency for programmes to be transmitted with multiple conditional access messages enabling access by different operators to the same programme (e.g. a football match or a thematic television channel).

According to the present invention, there is provided a decoder for a digital transmission system adapted to receive a transport packet stream containing table, section or other packetised data encapsulated within the packet payloads and characterised in that the decoder comprises a means for filtering the encapsulated data configurable in response to filter data received from a portable security module.

Filtering data at the table or section level in response to information from the security module enables a more precise identification and selection of data to be carried out, for example, to extract relevant conditional access messages addressed to the module. In practice, and as will be described below, this filtering at the table or section level may be carried out after and in addition to a filtering carried out at the transport packet level.

Preferably, the means for filtering encapsulated data is configurable in response to filter data comprising at least a table ID or section ID value transmitted by the portable security module. The means for filtering encapsulated data may equally be configurable in accordance with other data received from the portable security module.

In a preferred embodiment, the means for filtering encapsulated data is further adapted to forward to the security module conditional access data obtained in accordance with the filter data received from the security module.

Whilst the present invention is particularly adapted to enable a reduction of the volume of conditional access messages communicated between the decoder and the module, it will be nevertheless appreciated that the encapsulated data may be configured by the security module to extract data other than conditional access data and having a destination other than the security module.

Conditional access data filtered and forwarded to the security module may comprise entitlement control messages (ECMs) and/or entitlement management messages (EMMs).

Even within a group of messages associated with a single conditional access system there may be a large number of messages irrelevant to a particular user within that system. For example, within a single conditional access system a number of different groups of users may be defined leading to the generation of a number of EMMs, not all of which may be relevant to a given user.

Preferably therefore, filter data provided by the security module comprises data used by the filter means to extract group and/or individual entitlement management messages addressed to the security module.

In one embodiment, the decoder is adapted to receive a control word generated by the security module in response to the conditional access data forwarded thereto, the control word being used by the decoder to descramble a scrambled transmission.

In addition to a filtering at the table or section level, the decoder may further carry out a transport level filtering in order, for example, to extract only these packets comprising data associated with the particular conditional access system used by the security module. Preferably, therefore the decoder further comprises a means for filtering transport packet data configurable in response to data received from the security module.

Advantageously, the means for filtering transport packet data may be configurable in response to data representing the identity of the conditional access system received from the security module.

In one embodiment, the transport packet filtering means is adapted to extract transport packets containing a program map table and a conditional access table, the decoder further comprising selection means adapted to receive the program map table and conditional access table from the transport packet filtering means and conditional access identity data from the security module and thereafter configure the transport packet filtering means to extract transport packet data associated with the conditional access system in question.

In order to preserve security in the system, some or all communications between the security module and the decoder may be encrypted. In particular, the descrambling control word generated by the security module and eventually transmitted to the decoder may be encrypted.

The present invention has been described above in relation to a decoder. Other aspects of the invention relate to a method of filtering encapsulated data in a transport packet stream and a security module for use with a decoder or method of the present invention. In one embodiment, the security module may conveniently comprise a smart card.

Whilst the present invention may apply to any packet transmission system comprising a transport stream layer and a table or section layer, the present invention is particularly applicable to a decoder adapted to receive an MPEG compatible data stream.

In this regard, the term "table, section or other packetised data" refers in its broadest sense to any data table, alone or in a sequence, and comprising a header and payload and that is itself encapsulated within a transport packet stream. As will be described in the preferred embodiment, the present invention is particularly applicable to filtering of data contained within an MPEG table, notably a single MPEG short form table. Other embodiments are nevertheless conceivable, for example, in which filtering is carried out on PES packets encapsulated within the transport packet payloads.

In the context of this application, the term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term MPEG includes all variants, modifications or developments of MPEG formats applicable to the field of digital data transmission.

As used herein, the term "smart card" includes, but not exclusively so, any chip-based card device, or object of similar function and performance, possessing, for example, microprocessor and/or memory storage. Included in this term are devices having alternative physical forms to a card, for example key-shaped devices such as are often used in TV decoder systems.

The term "decoder" or "receiver/decoder" used herein may connote a receiver for receiving either encoded or non-encoded signals, for example, television and/or radio signals, which may be broadcast or transmitted by some other means. Embodiments of such receiver/decoders may include a decoder integral with the receiver for decoding the received signals, for example, in a "set-top box", a decoder functioning in combination with a physically separate receiver, as well as a decoder including additional functions, such as a web browser or integrated with a video recorder or a television.

As used herein, the term "digital transmission system" includes any transmission system for transmitting or broadcasting digital data, for example primarily audiovisual or multimedia digital data. Whilst the present invention is particularly applicable to a broadcast digital television system, the invention may also be applicable to a fixed telecommunications network for multimedia internet applications, to a closed circuit television, and so on.

As used herein, the term "digital television system" includes for example any satellite, terrestrial, cable and other system.

There will now be described, by way of example only, a preferred embodiment of the invention, with reference to the following figures, in which:
Figure 1 shows the overall architecture of a digital TV system according to this embodiment;
Figure 2 shows the architecture of the conditional access system of Figure 1;
Figure 3 shows the hierarchy of MPEG-2 packets, in particular those associated with conditional access messages;
Figure 4 shows the structure of long form and short form MPEG-2 private sections;
Figure 5 shows the elements of a receiver/decoder for use in this embodiment;
Figure 6 shows the elements of the receiver/decoder used to process the transport stream, in particular in relation to conditional access messages; and
Figure 7 shows the structure of the PID and section filters of the filter unit of Fig. 6.

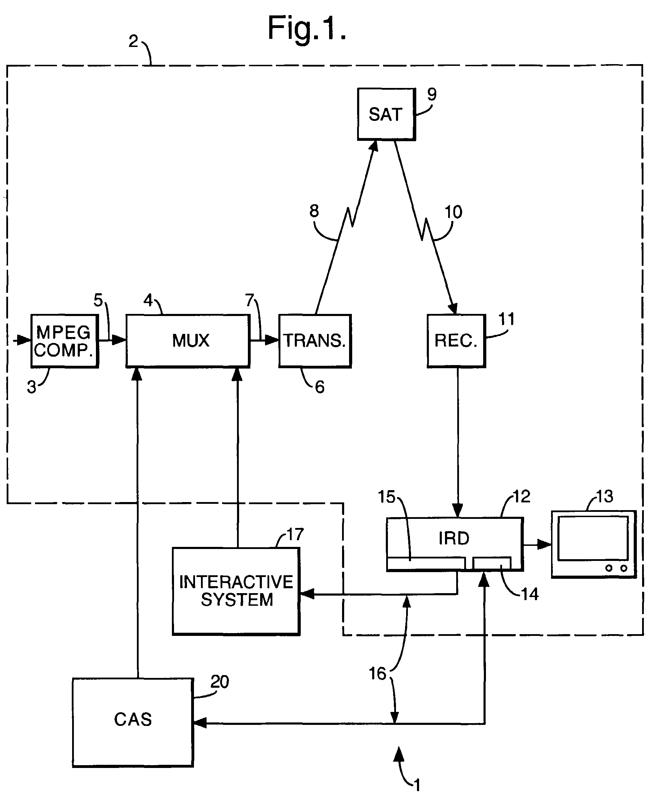

An overview of a digital television broadcast and reception system 1 is shown in Figure 1. The invention includes a mostly conventional digital television system 2 which uses the MPEG-2 compression system to transmit compressed digital signals. In more detail, MPEG-2 compressor 3 in a broadcast centre receives a digital signal stream (for example a stream of audio or video signals). The compressor 3 is connected to a multiplexer and scrambler 4 by linkage 5. The multiplexer 4 receives a plurality of further input signals, assembles one or more transport streams and transmits compressed digital signals to a transmitter 6 of the broadcast centre via linkage 7, which can of course take a wide variety of forms including telecom links.

The transmitter 6 transmits electromagnetic signals via uplink 8 towards a satellite transponder 9, where they are electronically processed and broadcast via a national downlink 10 to earth receiver 11, conventionally in the form of a dish owned or rented by the end user. The signals received by receiver 11 are transmitted to an integrated receiver/decoder 12 owned or rented by the end user and connected to the end user's television set 13. The receiver/decoder 12 decodes the compressed MPEG-2 signal into a television signal for the television set 13.

A conditional access system 20 is connected to the multiplexer 4 and the receiver/decoder 12, and is located partly in the broadcast centre and partly in the decoder. It enables the end user to access digital television broadcasts from one or more broadcast suppliers. A smartcard, capable of decrypting messages relating to commercial offers (that is, one or several television programmes sold by the broadcast supplier), can be inserted into the receiver/decoder 12. Using the decoder 12 and smartcard, the end user may purchase events in either a subscription mode or a pay-per-view mode.

An interactive system 17, also connected to the multiplexer 4 and the receiver/decoder 12 and again located partly in the broadcast centre and partly in the decoder, may be provided to enable the end user to interact with various applications via a modemmed back channel 16.

The conditional access system 20 will now be described in more detail.

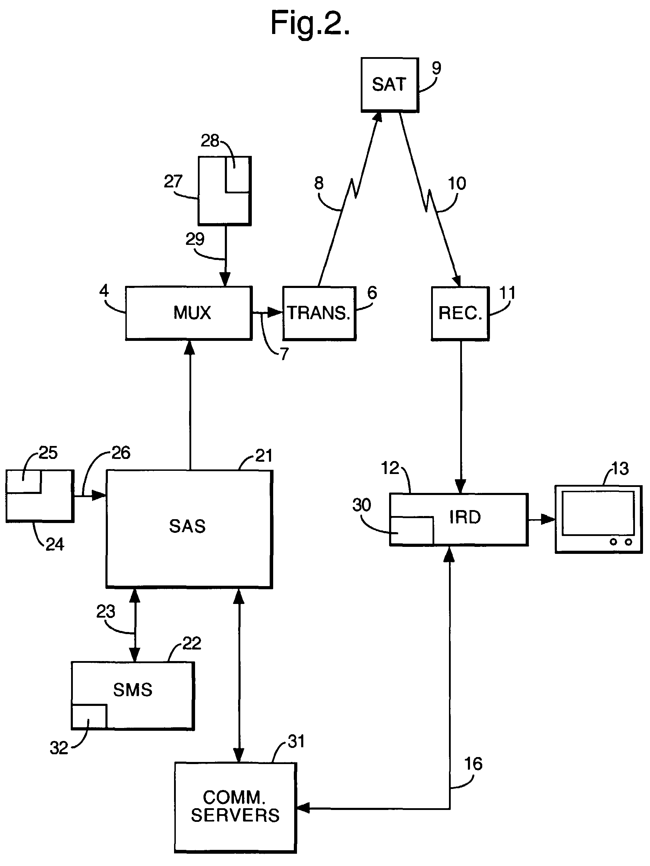

With reference to Figure 2, in overview the conditional access system 20 includes a Subscriber Authorization System (SAS) 21. The SAS 21 is connected to one or more Subscriber Management Systems (SMS) 22, one SMS for each broadcast supplier, by a respective TCP-IP linkage 23 (although other types of linkage could alternatively be used). Alternatively, one SMS could be shared between two broadcast suppliers, or one supplier could use two SMSs, and so on.

First encrypting units in the form of ciphering units 24 utilising "mother" smartcards 25 are connected to the SAS by linkage 26. Second encrypting units again in the form of ciphering units 27 utilising mother smartcards 28 are connected to the multiplexer 4 by linkage 29. The receiver/decoder 12 receives a "daughter" smartcard 30. It is connected directly to the SAS 21 by Communications Servers 31 via the modemmed back channel 16. The SAS sends, amongst other things, subscription rights to the daughter smartcard on request.

The smartcards contain the secrets of one or more commercial operators. The "mother" smartcard encrypts different kinds of messages and the "daughter" smartcards decrypt the messages, if they have the rights to do so.

The first and second ciphering units 24 and 27 comprise a rack, an electronic VME card with software stored on an EEPROM, up to 20 electronic cards and one smartcard 25 and 28 respectively, for each electronic card, one card 28 for encrypting the ECMs and one card 25 for encrypting the EMMs.

The operation of the conditional access system 20 of the digital television system will now be described in more detail with reference to the various components of the television system 2 and the conditional access system 20.

### Multiplexer and Scrambler

With reference to Figures 1 and 2, in the broadcast centre, the digital audio or video signal is first compressed (or bit rate reduced), using the MPEG-2 compressor 3. This compressed signal is then transmitted to the multiplexer and scrambler 4 via the linkage 5 in order to be multiplexed with other data, such as other compressed data.

The scrambler generates a control word used in the scrambling process and included in the MPEG-2 stream in the multiplexer. The control word is generated internally and enables the end user's integrated receiver/decoder 12 to descramble the programme.

Access criteria, indicating how the programme is commercialised, are also added to the MPEG-2 stream. The programme may be commercialised in either one of a number of "subscription" modes and/or one of a number of "Pay Per View" (PPV) modes or events. In the subscription mode, the end user subscribes to one or more commercial offers, or "bouquets", thus getting the rights to watch every channel inside those bouquets. In the preferred embodiment, up to 960 commercial offers may be selected from a bouquet of channels.

In the Pay Per \/iew mode, the end user is provided with the capability to purchase events as he wishes. This can be achieved by either pre-booking the event in advance ("pre-book mode"), or by purchasing the event as soon as it is broadcast ("impulse mode"). In the preferred embodiment, all users are subscribers, whether or not they watch in subscription or PPV mode, but of course PPV viewers need not necessarily be subscribers.

### Entitlement Control Messages

Both the control word and the access criteria are used to build an Entitlement Control Message (ECM). This is a message sent in relation with a scrambled program; the message contains a control word (which allows for the descrambling of the program) and the access criteria of the broadcast program. The access criteria and control word are transmitted to the second encrypting unit 27 via the linkage 29. In this unit, an ECM is generated, encrypted and transmitted on to the multiplexer and scrambler 4. During a broadcast transmission, the control word typically changes every few seconds, and so ECMs are also periodically transmitted to enable the changing control word to be descrambled. For redundancy purposes, each ECM typically includes two control words; the present control word and the next control word.

Each service broadcast by a broadcast supplier in a data stream comprises a number of distinct components; for example a television programme includes a video component an audio component, a sub-title component and so on. Each of these components of a service is individually scrambled and encrypted for subsequent broadcast to the transponder 9. In respect of each scrambled component of the service, a separate ECM is required. Alternatively, a single ECM may be required for all of the scrambled components of a service. Multiple ECMs are also generated in the case where multiple conditional access systems control access to the same transmitted program.

### Programme Transmission

The multiplexer 4 receives electrical signals comprising encrypted EMMs from the SAS 21, encrypted ECMs from the second encrypting unit 27 and compressed programmes from the compressor 3. The multiplexer 4 scrambles the programmes and sends the scrambled programmes, the encrypted EMMs and the encrypted ECMs to a transmitter 6 of the broadcast centre via the linkage 7. The transmitter 6 transmits electromagnetic signals towards the satellite transponder 9 via uplink 8.

### Programme Reception

The satellite transponder 9 receives and processes the electromagnetic signals transmitted by the transmitter 6 and transmits the signals on to the earth receiver 11, conventionally in the form of a dish owned or rented by the end user, via downlink 10. The signals received by receiver 11 are transmitted to the integrated receiver/decoder 12 owned or rented by the end user and connected to the end user's television set 13. The receiver/decoder 12 demultiplexes the signals to obtain scrambled programmes with encrypted EMMs and encrypted ECMs.

If the programme is not scrambled, that is, no ECM has been transmitted with the MPEG-2 stream, the receiver/decoder 12 decompresses the data and transforms the signal into a video signal for transmission to television set 13.

If the programme is scrambled, the receiver/decoder 12 extracts the corresponding ECM from the MPEG-2 stream and passes the ECM to the "daughter" smartcard 30 of the end user. This slots into a housing in the receiver/decoder 12. The daughter smartcard 30 controls whether the end user has the right to decrypt the ECM and to access the programme. If not, a negative status is passed to the receiver/decoder 12 to indicate that the programme cannot be descrambled. If the end user does have the rights, the ECM is decrypted and the control word extracted. The decoder 12 can then descramble the programme using this control word. The MPEG-2 stream is decompressed and translated into a video signal for onward transmission to television set 13.

### Entitlement Management Messages (EMMs)

The EMM is a message dedicated to an individual end user (subscriber), or a group of end users. Each group may contain a given number of end users. This organisation as a group aims at optimising the bandwidth; that is, access to one group can permit the reaching of a great number of end users.

Various specific types of EMM can be used. Individual EMMs are dedicated to individual subscribers, and are typically used in the provision of Pay Per View services; these contain the group identifier and the position of the subscriber in that group.

Group subscription EMMs are dedicated to groups of, say, 256 individual users, and are typically used in the administration of some subscription services. This EMM has a group identifier and a subscribers' group bitmap.

Audience EMMs are dedicated to entire audiences, and might for example be used by a particular operator to provide certain free services. An "audience" is the totality of subscribers having smartcards which bear the same conditional access system identifier (CA ID). Finally, a "unique" EMM is addressed to the unique identifier of the smartcard.

### Subscriber Management System (SMS)

A Subscriber Management System (SMS) 22 includes a database 32 which manages, amongst others, all of the end user files, commercial offers, subscriptions, PPV details, and data regarding end user consumption and authorization. The SMS may be physically remote from the SAS.

Each SMS 22 transmits messages to the SAS 21 via respective linkage 23 which imply modifications to or creations of Entitlement Management Messages (EMMs) to be transmitted to end users.

The SMS 22 also transmits messages to the SAS 21 which imply no modifications or creations of EMMS but imply only a change in an end users state (relating to the authorization granted to the end user when ordering products or to the amount that the end user will be charged).

The SAS 21 sends messages (typically requesting information such as call-back information or billing information) to the SMS 22, so that it will be apparent that communication between the two is two-way.

### Subscriber Authorization System (SAS)

The messages generated by the SMS 22 are passed via linkage 23 to the Subscriber Authorization System (SAS) 21, which in turn generates messages acknowledging receipt of the messages generated by the SMS 21 and passes these acknowledgements to the SMS 22.

In overview the SAS comprises a Subscription Chain area to give rights for subscription mode and to renew the rights automatically each month, a Pay Per View Chain area to give rights for PPV events, and an EMM Injector for passing EMMs created by the Subscription and PPV chain areas to the multiplexer and scrambler 4, and hence to feed the MPEG stream with EMMs. If other rights are to be granted, such as Pay Per File (PPF) rights in the case of downloading computer software to a user's Personal Computer, other similar areas are also provided.

One function of the SAS 21 is to manage the access rights to television programmes, available as commercial offers in subscription mode or sold as PPV events according to different modes of commercialisation (pre-book mode, impulse mode). The SAS 21, according to those rights and to information received from the SMS 22, generates EMMs for the subscriber.

The EMMs are passed to the Ciphering Unit (CU) 24 for ciphering with respect to the management and exploitation keys. The CU completes the signature on the EMM and passes the EMM back to a Message Generator (MG) in the SAS 21, where a header is added. The EMMs are passed to a Message Emitter (ME) as complete EMMs. The Message Generator determines the broadcast start and stop time and the rate of emission of the EMMs, and passes these as appropriate directions along with the EMMs to the Message Emitter. The MG only generates a given EMM once; it is the ME which performs cyclic transmission of the EMMs.

On generation of an EMM, the MG assigns a unique identifier to the EMM. When the MG passes the EMM to the ME, it also passes the EMM ID. This enables identification of a particular EMM at both the MG and the ME.

In systems such as simulcrypt which are adapted to handle multiple conditional access systems e.g. associated with multiple operators, EMM streams associated with each conditional access system are generated separately and multiplexed together by the multiplexer 4 prior to transmission.

### Conditional Access Messages in the Transport Stream

The different nature of ECM and EMM messages leads to differences vis à vis the mode of transmission of the messages in the MPEG transport stream. ECM messages, which carry the control words needed to descramble a programme are necessarily linked to the video and audio streams of the programme being transmitted, in contrast EMM messages are general messages broadcast asynchronously to transmit rights information to individual or groups of customers. This difference is reflected in the placing of ECM and EMM messages within the MPEG transport stream.

As is known, MPEG transport packets are of a fixed length of 188 bytes including a header. In a standard packet, the three bytes of the header following the synchronisation data comprise:

**TABLE I**

| | |
|---|---|
| Transport error indicator | 1 bit |
| Payload unit indicator | 1 bit |
| Transport priority | 1 bit |
| PID | 13 bits |
| Transport scrambling control | 2 bits |
| Adaptation field control | 2 bits |
| Continuity counter | 4 bits |

The characteristics of these fields are largely determined by the MPEG standard.

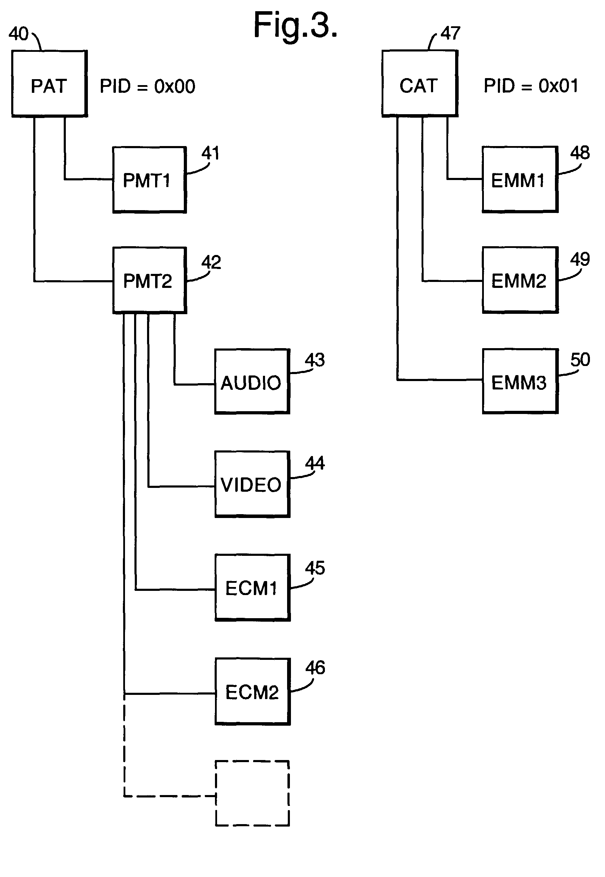

Referring to Figure 3, the organisation of data within a transport stream will be described. As shown, the transport stream contains a programme association table 40 ("PAT"), the PID in the header of the packet being fixed by the MPEG-2 standard at a value of 0x00. The programme access table 40 provides the entry point for access to programme data and contains a table referring to the PID values of the programme map tables ("PMT") 41, 42 associated with a number of programmes. Each programme map table 41, 42 contains in turn a reference to the PID values of the packet streams of the audio tables 43 and video tables 44 of that programme.

As shown, the programme map table 42 also contains references to the PID values of other packets 45, 46 containing additional data relating to the programme in question. In the present case ECM data generated by a number of conditional access systems and associated with the programme in question is contained within the referred packets 45, 46.

In addition to the programme access table PAT 40, the MPEG transport stream further comprises a conditional access table 47 ("CAT"), the PID value of which is fixed at 0x01. Any packet headers containing this PID value are thus automatically identified as containing access control information. The CAT table 47 refers to the PID values of MPEG packets 48, 49, 50 associated with EMM data associated with one or more conditional access systems. As with the PMT packets, the PID values of the EMM packets referred to in the CAT table are not fixed and may be determined at the choice of the system operator.

### Private Section Data

In conformity with the MPEG-2 standard, information contained with a packet payload is subject to a further level of structure according to the type of data being transported. In the case of audio, visual, teletext, subtitle or other such rapidly evolving and synchronised data, the information is assembled in the form of what is known as a packetised elementary stream or PES. This data stream, which is formed by assembling the payloads of the transmitted packets, itself comprises a sequence of packets, each packet comprising a packet header and payload. Unlike the transmitted packets in the transport stream, the length of PES packets is variable.

In the case of other data, such as application data or, in this example, ECM and EMM data, a different format from PES packeting is proscribed. In particular, data contained in the transport packet payload is divided into a series of sections or tables, the table or section header including a table ID or TID identifying the table in question. Depending on the size of the data, a section may be contained entirely within a packet payload or may be extended in a series of tables over a number of transport packets. In the MPEG-2 context, the term "table" is often used to refer to a single table of data, whilst "section" refers to one of a plurality of tables with the same TID value.

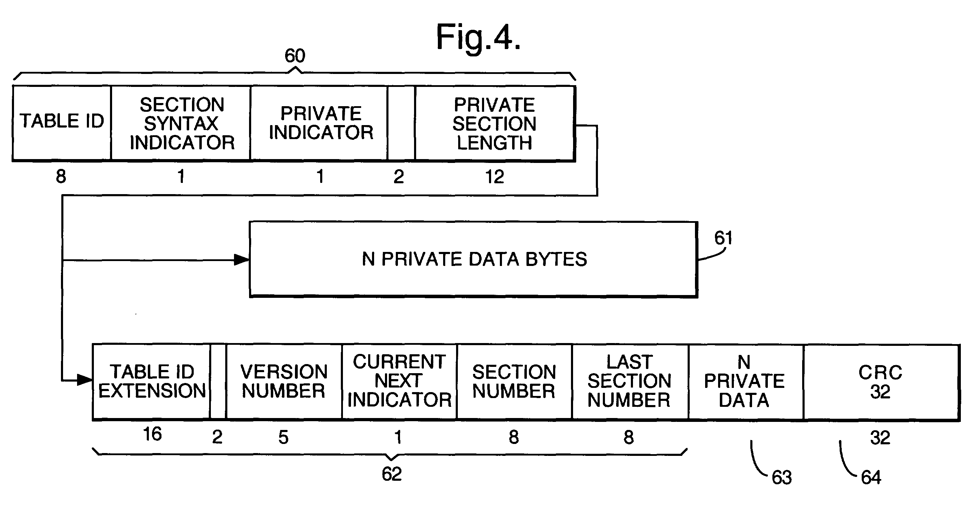

As with transport packet data and PES packet data, the data structure of a table or section is additionally defined by the MPEG-2 standard. In particular, two possible syntax forms for private table or section data are proposed; a long form or a short form, as illustrated in Figure 4.

In both the short and long form, the header includes at least the data 60 comprising:

**TABLE II**

| | |
|---|---|
| Table id | 8 bits |
| Section syntax indicator | 1 bit |
| Private indicator/reserved | 1 bit |
| ISO reserved | 2 bits |
| Section length | 12 bits |

The private indicator and private section lengths are comprised of data not fixed by the MPEG-2 standard and which may be used by the system operator for his own purposes.

In the case of short form, the header 60 is immediately followed by the payload data 61. In the case of the long form, a further header section 62 is provided before the payload 63 and the message equally includes a CRC check value 64. The long form, which is typically used when a message is so long that it must be divided into a number of sections, contains the information necessary to assemble the sections, such as the section number, the number of the last section in the sequence of sections etc.

For further information regarding the long and short form table data, the reader is directed to the MPEG-2 standard.

In the case of conditional access ECM and EMM messages, the data may usually be accomodated in a single table and the short form will be the appropriate format. A specific syntax for such short form conditional access messages is proposed in the context of the present invention, namely:

**TABLE III**

| | |
|---|---|
| Table id (filter data) | 8 bits (1 byte) |
| Section syntax indicator | 1 bit |
| Private indicator/reserved | 1 bit |
| ISO reserved | 2 bits |
| Section length | 12 bits |
| CA specific header field (filter data) | 56 bits (7 bytes) |

For such CA messages, the table id value may be set by the system operator at, for example, 0x80 and 0x81 for ECM messages (for example, odd and even messages) and 0x82 to 0x8F for EMM messages. These values are not MPEG-2 proscribed and may be chosen at the discretion of the system operator.

Equally, in the case of the CA specific header field, hereby designated as the first 7 bytes of the payload following the header, the parameters may be set by the system operator to reflect, for example, the fact that the CA message is an EMM message carrying individual, group or audience subscription information. In this manner the "header" of such a table or section is extended.

The advantages of such message syntax will become clear later, with regard to the processing and filtering of messages by the receiver/decoder, notably by using the Table id and CA specific field data.

### Receiver/decoder

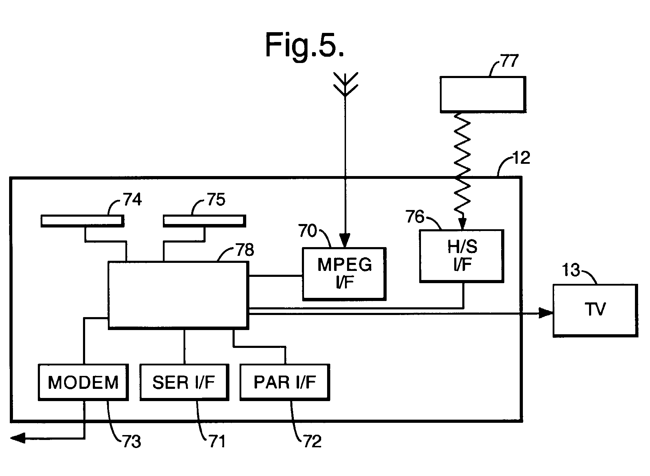

Referring to Figure 5, the elements of a receiver/decoder 12 or set-top box for use in a digital broadcast system and adapted to be used in the present invention will now be described. As will be understood, the basic elements of this decoder are largely conventional and their implementation will be within the capabilities of one skilled in the art.

As shown, the decoder 12 is equipped with several interfaces for receiving and transmitting data, in particular a tuner 70 for receiving broadcast MPEG transmissions, a serial interface 71, a parallel interface 72, and a modem 73 for sending and receiving data via the telephone network. The decoder also includes a first and second smart card reader 74 and 75, the first reader 74 for accepting the subscription smart card and the second reader 75 for accepting bank and/or other smart cards.

The decoder also includes a receiver 76 for receiving infra-red control signals from a handset remote control 77 and a Peritel ouput for sending audiovisual signals to a television 13 connected to the decoder.

Processing of digital signals received via the interfaces and generation of output signals is handled by an ensemble of hardware and software elements here grouped together as a central control unit 78. The software architecture of the control unit within the decoder may correspond to that used in a known decoder and will not be described here in any detail. It may be based, for example, on a virtual machine interacting via an interface layer with a lower level operating system implemented in the hardware components of the decoder. In terms of hardware architecture, the control unit 78 will be equipped with a processor, memory elements such as ROM, RAM, FLASH memory etc. as in known decoders.

Applications processed by the control unit 78 may be resident applications stored in the ROM or FLASH of the decoder or applications broadcast and downloaded via the MPEG interface 2 of the decoder. Applications can include program guide applications, games, interactive services, teleshopping applications, as well as initiating applications to enable the decoder to be immediately operational upon start-up and applications for configuring aspects of the decoder. Applications are stored in memory locations in the decoder and represented as resource files comprising graphic object descriptions files, unit files, variables block files, instruction sequence files, applications files, data files etc.

### Filtering of Conditional Access Data

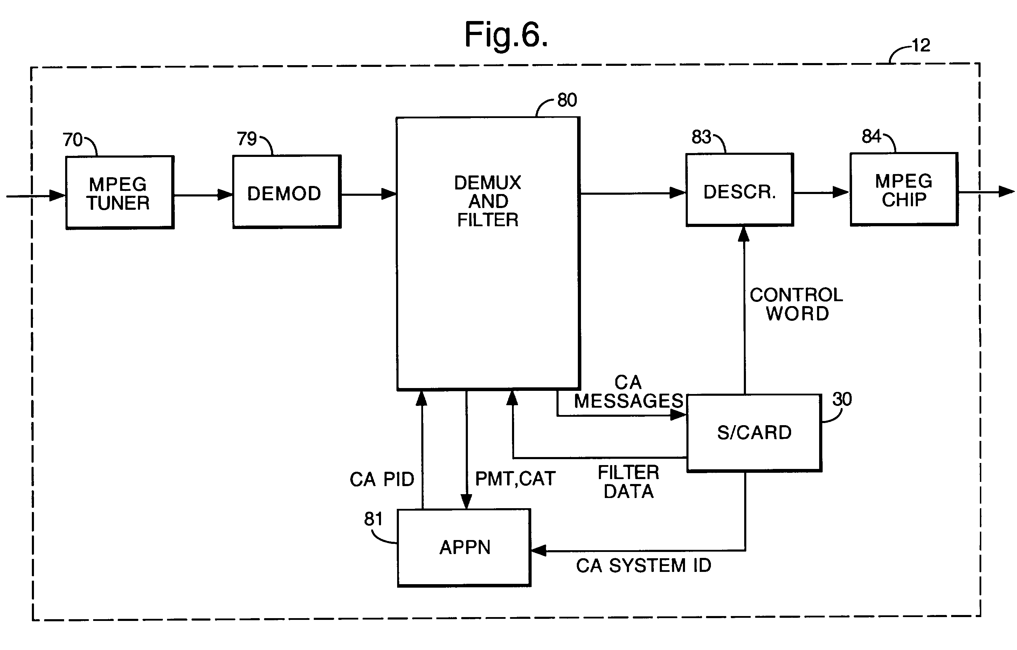

Figure 6 shows in schematic form the elements necessary for processing packet and table data in accordance with this embodiment of the invention. As will be understood, the elements shown in this figure may be implemented in hardware, software or in combination of the two.

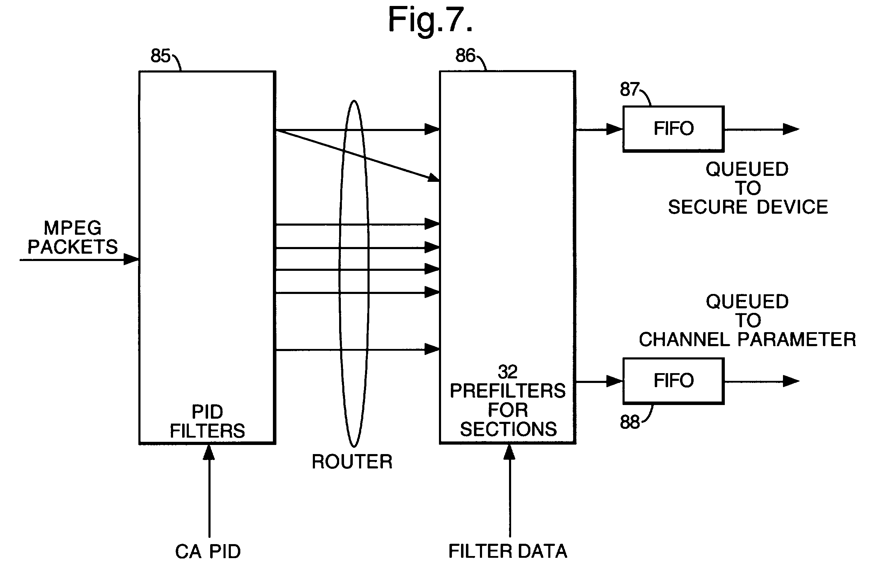

The broadcast transmission received from the satellite receiver are passed via the conventional tuner 70 and an associated demodulator unit 79. The tuner 70 typically scans a range of frequencies, stopping when a chosen carrier frequency is detected within that range. The signals are then treated by the demodulator unit 79 which extracts and forwards the transport packet stream to a demux and filter unit 80. The filter structure of the demux and filter unit 80 will be described in detail below in relation to Figure 7. As will be understood, the actual choice of components needed to implement such a unit is at the discretion of the manufacturer and the most important aspect of such a unit is the chosen filter configuration.

In the case of data encrypted in accordance with a conditional access system as per the present embodiment, the filter unit interacts with a smart card 30 (or any other secure device) inserted in the decoder 12 and a channel parameter application 81, typically implemented as a software application in the decoder.

The filter unit 80 extracts from the transport packet stream the PMT and CAT tables present in the stream. Referring back to Figure 3, this filtering operation is carried out at a PID level, the CAT table being identified by the PID value 0x01 and the appropriate PMT table corresponding to the chosen broadcast channel being extracted via the PAT table (PID value: 0x00) and the PID value of the chosen channel identified in the PAT table.

The channel parameter application 81 additionally receives from the smart card 30 an identification of the conditional access system associated with that smart card. Again, referring back to Figure 3, a first conditional access system is associated with ECM and EMM data in the packets 45 and 48, respectively. Using the conditional access system ID received from the smart card 30 and the PMT and CAT tables received from the filter unit 80, the application 81 determines the PID values of the conditional access packets associated with the conditional access system in question and returns these values to the filter unit 80.

In the case of a simplified system, where a relatively small number of ECM and EMMs are emitted, no other filtering may be necessary and these PID values may be used by the filter unit 80 to extract all relevant ECM and EMM private sections from the identified packets and to thereafter forward the data contained within these sections to the smart card 30.

This conditional access data is then processed by the microprocessor within the smart card 30 and the control word associated with the transmission passed to a descrambling unit 83. The descrambling unit 83 receives scrambled audiovisual or other data information extracted from the transport packet stream by the demux and filter unit 80, descrambles the information using the control word and thereafter passes the data to a convention MPEG-2 chip which prepares the data for subsequent display on the associated television display.

However, whilst a PID level filter enables an extraction of those ECM and EMM messages associated exclusively with the conditional access system in question, there may nevertheless be a large proportion of messages irrelevant to the user. These messages may include group EMM messages for other user groups, individual EMM messages for other users etc. The throughput of conditional access messages passed to the smart card may therefore be very high. Given the limitations of the processor power and memory of smart cards, this throughput may be in practice more than the card can handle.

In order to overcome this problem, the smartcard 30 is adapted to pass further filter data to the unit 80 for use in a section or table level filter process.

Referring to the Table III above, tables containing conditional access data include Table id and CA specific header fields which are chosen to identify, for example, the presence of an EMM or ECM (table id values 0x80 or 0x81 and 0x82 to 0x8F, respectively) and the type of message (CA specific data identifying the group concerned by a group EMM message, the presence of an audience EMM message etc.). Depending on the data that it requires, the smart card 30 will send the necessary table id and CA specific data to configure the filter unit to extract and return only those conditional access messages of interest to the smart card. In this way, the flow of data sent to the smart card may be reduced to conform with the processing capabilities of the smart card microprocessor.

Referring to Figure 7, the details of the filtering unit 80 will be described. Typically, the unit may be implemented as a hardware resource, driven by a firmware managing application with the receiver/decoder. As shown, a first set of filters 85 carries out a PID filtering process using the CA PID information received from the channel parameter application. The PID filters 85 may equally be configured to extract other relevant packets such as the PMT, CAT tables sent to the channel parameter application. Other PID filters (not shown) may be used to extract the audiovisual PES packet information eventually sent to the descrambler etc.

Once stripped of the packet header, the private section or table data is then routed to a set of prefilters 86 adapted to filter the 8 bytes in the extended header of a table. As shown in Table III, 1 byte of the extended header is associated with the table id, 7 bytes with the CA specific information. The filtering operation is carried out by comparison of the 8 byte pattern in a table with the filter data received from the smart card. Some bits within the 8 byte, 64 bit pattern may be masked or ignored in the evaluation. In this embodiment, 32 different patterns are proposed, a subset of these patterns being applied by the prefilters in dependence of the information received from the smart card. If one pattern matches, the section is sent to the FIFO buffer element 87. If no pattern matches, the section is ignored. The filters 86 equally act to extract from the appropriate sections the PMT and CAT table information, which is passed to a FIFO buffer 88.

Due to the characteristics of the transport layer, the arrival of sections is bursty. The buffer capacity of the buffers 87, 88 must be sufficient to handle an average rate of 5Mbits/s, with the insertion of packets being based on a regular allocation with a possible deviation of ± 25%.

In order to better understand the invention, a proposed example of operating instructions handled by the section filters 86 will now be outlined.
*Filter_all_sections (Filter_id, Target, Mask, Trigger_conditions, p/n)*
   This command retrieves every section matching the target except masked bits after trigger_conditions occured.
*Filter_next_section (Filter_id, Target, Mask, Trigger_conditions, p/n)*
   This command retrieves the next section matching the target except masked bits after trigger_conditions occured. Trigger_conditions are related to other filters previously identified as matching.
*Filter_id* is an index between 0 and 31, pointing to a filter and an output queue. In addition, it gives the queueing priority, 0 being the highest priority.
*Target* is an 8 bytes pattern.
*Mask* is an 8 bytes pattern showing the bits to be masked in the target, value 0 means masked.
*Trigger_conditions* is a 32 bib bitmap, ORing filter_id triggering that filter. Bit set at 0 means no trigger condition. Self trigger condition is ignored.
*p/n* is a value, normally set to 1, positive for normal operation as described above. When set to 0 it means negative filtering, i.e., retrieve sections not matching target.

### Examples of use:

### Example 1:

Filter_all_sections(5, 0x8C7C453AA8BBFF00, 0XFF557FFFEEFFFF00, 0, 1) will capture all EMMs corresponding To matching criteria.

### Example 2:

Filter_next_section(0, 0x8000000000000000, 0xFF00000000000000, 0, 1)
Filter_next_section(1, 0x8100000000000000, 0xFF00000000000000, 5, 1)
Filter_next_section(2, 0x8000000000000000, 0xFF00000000000000, 3, 1)
will start an ECM capture process with odd/even toggle.

### Example 3:

Filter_next_section(8, 0xPMT_TID0000Version_number00000000, 0xFF00001F00000000, 0, 0)
Filter_next_section(1, 0x8100000000000000, 0xFF00000000000000, 0x14, 1)
Filter_next_section(2, 0x8000000000000000, 0xFF00000000000000, 0x12, 1)
will start an ECM capture process with odd/even toggle, starting when there is a change in the PMT.

In terms of communication of CA messages and filter data to and from the smart card 82 and filter unit 80, a standard protocol such as ISO7816 may be used. Since not all of the data in the filtered private section is required by the smart card 82, the section may be modified and a message of the following format sent to the smart card:

| | |
|---|---|
| Table id | 8 bits |
| Zero | 11 bits |
| Filter id | 5 bits |
| CA specific header field | 56 bits |
| CA message | N*8 bits |

The meaning of each of these terms will be clear from the above description. In terms of the filter data sent from the smart card 82 to the filter 80, the following format may be used:

| | |
|---|---|
| Number of filters | 8 bits |
| Filtering instruction | 5 bits |
| Filter id | 5 bits |
| Target | 64 bits |
| Mask | 64 bits |
| Trigger conditions | 5 bits |
| p/n | 1 bit |

*Number_of_filters* describes the number of filters to be set in this instruction.
*Filtering_instruction* is describing the type of instruction (filter next section, filter all sections).
*Filter_id* is an index pointing to a filter and an output queue. In addition, it gives the queueing priority, 0 being the highest priority.
*Target* is the target pattern.
*Mask* is a pattern showing the bits to be masked in the target, value 0 means masked.
*Trigger_conditions* is a bitmap. ORing filter_id triggering that filter. Bit set at 0 means no trigger condition. Self trigger condition is ignored.
*p/n* is a value, normally set to 1, positive for normal operation as described above. When set to 0 it means negative filtering, i.e., retrieve sections not matching target.

In practice, communications between the smart card and the receiver/decoder may be subject to a level of encryption or scrambling for security reasons. In particular, communications between the smart card 82 and filter unit 80, as well as the control word stream sent to the descrambler unit 83 may be encoded in this way. Encryption algorithms suitable for this purpose are widely known (RSA, DES etc.).

## Claims

1. A decoder adapted to receive a transport packet stream containing table, section or other packetised data encapsulated within the packet payloads and characterised in that the decoder comprises a means for filtering the encapsulated data configurable in response to filter data received from a portable security module.

2. A decoder as claimed in claim 1 in which the means for filtering encapsulated data is configurable in response to filter data comprising at least a table ID or section ID value transmitted by the portable security module.

3. A decoder as claimed in claim 1 or 2 in which the means for filtering encapsulated data is further adapted to forward to the security module conditional access data obtained in accordance with the filter data received from the security module.

4. A decoder as claimed in claim 3 in which conditional access data forwarded to the security module comprises entitlement control messages (ECMs) and/or entitlement management messages (EMMs).

5. A decoder as claimed in claim 3 or 4 in which filter data provided by the security module comprises data used by the filter means to extract group and/or individual entitlement management messages addressed to the security module.

6. A decoder as claimed in any of claims 3 to 5 in which the decoder is adapted to receive a control word generated by the security module in response to the conditional access data forwarded thereto, the control word being used by the decoder to descramble a scrambled transmission.

7. A decoder as claimed in any preceding claim further comprising a means for filtering transport packet data configurable in response to data received from the security module.

8. A decoder as claimed in claim 7, in which the means for filtering transport packet data is configurable in response to data representing the identity of the conditional access system received from the security module.

9. A decoder as claimed in claim 8 in which the transport packet filtering means is adapted to extract transport packets containing a program map table and a conditional access table, the decoder further comprising selection means adapted to receive the program map table and conditional access table from the transport packet filtering means and conditional access identity data from the security module and thereafter configure the transport packet filtering means to extract transport packet data associated with the conditional access system in question.

10. A decoder as claimed in any preceding claim adapted to process encrypt and/or decrypt communications to and from the portable security module.

11. A security module for use with a decoder as claimed in any preceding claim and characterised in comprising a memory means for storing filter data subsequently communicated to the decoder to configure the means for filtering encapsulated data.

12. A security module as claimed in claim 13 comprising a smart card.

13. A method of processing a transport packet stream containing table, section or other packetised data encapsulated within the packet payloads characterised by receiving the transport stream in a decoder and filtering the encapsulated data in response to filter data received from a portable security module.

14. A method of processing a transport packet stream as claimed in claim 13 further comprising generating encapsulated data including conditional access data and filtering at the decoder using the encapsulated data and in response to filter data supplied by the portable security module.
